# EUROPEAN PATENT APPLICATION

(11) **EP 3 378 308 A1**
(43) Date of publication of application: **26.09.2018**
(21) Application number: 17162722.7
(22) Date of filing: 24.03.2017
(51) Int. Cl.: A01M 23/24, A01M 31/00

(54) **SYSTEM AND METHOD FOR DETECTING RATS AND MICE INFESTATIONS**

(71) Applicant: Skehøjgaard Development ApS, 9610 Nørager (DK)
(72) Inventor: SØRENSEN, Kurt, 9610 Nørager (DK)
(74) Representative: Larsen & Birkeholm A/S

(57) **Abstract**

The present invention relates to a system for detecting and predicting rats and mice infestations. The system comprises a plurality of rechargeable traps, and a receiver unit configured for receiving a monitoring data signal from the rechargeable traps. The receiver unit comprises a processor and is operatively connected to a database. The database is adapted to store multiple database entries representing a value of a parameter related to rats and mice infestations at various points in time. The processor is programmed to perform a univariate and/or multivariate analysis of the database entries to detect and predict rats and mice infestations in a predefined geographical area.

## Description

### Technical field of the invention

The present invention relates to a system and a method for detecting rodent infestations.

### Background of the invention

Urban environments provide suitable conditions for certain species of rodents, particularly Norway rats and house mice, to proliferate. Mice and rats generally pose a health hazard due to disease spreading. Rat urine per se presents an additional health hazard because of the potential presence of Leptospira spp., which can enter the blood through skin cuts causing the potentially fatal Weil's disease. In addition, presence of rats and mice often impose a significant economic cost through the potential destruction of building materials, such as wall and roof insulation, electrical wiring, and packaging. Rats are much worse than mice in regards to both disease spreading and destruction of building materials. To devise and target efficient pest control strategies, it is essential to have a reliable and sensitive method of identifying the presence and location of rats and mice in the environment and of identifying the species concerned. Conventional methods of detection rely on an infestation reaching large enough proportions to show physical signs, the presence of faeces and signs of gnawing damage are the most commonly used. Whilst such signs can be reliable, they usually identify an infestation that is well established, which will be difficult to eradicate and could already have caused much damage. Small numbers of rats and mice will not always leave such obvious signs in visible sites. Droppings from mice are often difficult to spot, while those from rats are usually located in small numbers of latrine sites. Therefore, whilst such methods can be reliable for detecting large scale infestations, they are usually inadequate for detecting the presence of rodents at a low level.

### Object of the Invention

The objective of the present invention is to provide a system for detecting and predicting rats and mice infestations, which alleviates or mitigates the disadvantages associated with prior art methods.

### Description of the Invention

One aspect of the present invention relates to a system for detecting and predicting rats and mice infestations comprising:
- a plurality of rechargeable traps comprising:
   a) a spring driven and/or gas pressure driven killing means;
   b) species monitoring means configured for determining the species by monitoring the degree of advancement of the killing means during an individual triggering;
   c) kill monitoring means configured for determining the number of kills by monitoring the number of triggering of the killing means; and
   d) a transmitter unit configured for receiving monitoring data from the species monitoring means and from the kill monitoring means, and configured for transmitting the received monitoring data; and
- a receiver unit configured for receiving a monitoring data signal from the transmitter unit; the receiver unit comprising a processor and being operatively connected to a database;
wherein the database is adapted to store multiple database entries representing a value of a parameter at various points in time, the parameter being selected from the first group of i) individual number of rats killed by said killing means ii) combined number of rats killed by said killing means, iii) average number of rats killed by said killing means, iv) individual number of mice killed by said killing means v) combined number of mice killed by said killing means, vi) average number of mice killed by said killing means, vii) individual number of rodents killed by said killing means viii) combined number of rodents killed by said killing means, ix) average number of rodents killed by said killing means, and optionally from the second group of I) location of said plurality of rechargeable traps, II) individual location of said plurality of rechargeable traps III) average temperature in the vicinity of said individual rechargeable traps, IV) individual temperature in the vicinity of said individual rechargeable traps, V) average humidity in the vicinity of said plurality of rechargeable traps, VI) individual humidity in the vicinity of said plurality of rechargeable traps, VII) individual type of bait used in said plurality rechargeable traps, and VIII) bait type composition used in said plurality rechargeable traps; and wherein the processor is programmed to:
1a) perform a univariate analysis of the database entries of said first group to obtain a first set of data representing expected values of at least one of said parameters at future points in time; and
1 b) store the first set of data in said database; and/or
2a) perform a multivariate analysis of the database entries of said first group and said second group to produce a second set of data, derived from combined analysis of values of at least one of the said parameters from said first group, and at least one of the said parameters from said second group; the second set of data being representative of a) the current and/or future degree of rats and/or mice infestation in the area where the plurality of rechargeable traps are positioned, and/or b) the optimal timing for providing service to the plurality of rechargeable traps, and/or c) the type of bait to be used in the plurality of rechargeable traps, and/or d) the need for more or less rechargeable traps in a given area, and/or e) specific locations suitable for positioning rechargeable traps, and/or f) problem zones; and
2b) store the second set of data in said database.

Mechanical traps are characterised by killing means that strikes the rodent and almost instantly kills the rodent. The killing means in mechanical traps are normally spring driven or gas pressure driven, and may be recharged by electrical means or gas pressure driven means.
The species monitoring means configured for determining the species by monitoring the degree of advancement of the killing means during an individual triggering. If a mouse has activated the killing means, the killing means will travel a longer distance than for a rat due to the difference in size. Hence, this method of distinguishing between mice and rats is simple and reliable.

The kill monitoring means should simply be able to detect each time the killing means is activated. The kill monitoring means could be embodied as e.g. a shock sensor, or a motion sensor.

The transmitter unit is configured for receiving monitoring data from the species monitoring means and from the kill monitoring means, and configured for transmitting the received monitoring data. The signal may be transmitted by e.g. satellite, 4G, 3G, 5G, radio link, GSM, LTE, UMTS and/or through an internet-of-things (IoT) network.

The receiver unit is configured for receiving a monitoring data signal from the transmitter unit. The receiver unit comprises a processor and is operatively connected to a database. The receiver unit and the database need not be located in the same physical location.

The term "univariate data analysis" refers to data analysis in which data relating to a single variable are analysed. The univariate data analysis may comprise analysis of correlated univariate variables.

The term "multivariate data analysis" refers to data analysis in which data relating to at least two variables are analysed. The benefits of univariate and multivariate data analysis are utilised in order to more precisely detect and predict rats and mice infestations by taking into account a plurality of parameters. Thus, an accurate analysis is made, which results in an indication of a current situation, with a view to make it possible to predict future situations.

It should be understood that a result from the univariate or multivariate analysis may be used as an input for further analysis. The further analysis may be univariate or multivariate. For example, the output from a Principal Component Analysis (PCA) may be used as an input for a State Space Model (SSM) or vice versa.

In one or more embodiments, the processor is programmed to:
1a) perform a univariate analysis of the database entries of said first group to obtain a first set of data representing expected values of at least one of said parameters at future points in time; and
1 b) store the first set of data in said database.

In one or more embodiments, the processor is further programmed to 1c) compare said first set of data with a pattern of previously measured values of the same parameter, to predict: a) the current and future degree of rats and mice infestation in the area where the plurality of rechargeable traps are positioned, and/or b) the optimal timing for providing service to the plurality of rechargeable traps, and/or c) the type of bait to be used in the plurality of rechargeable traps, and/or d) the need for more or less rechargeable traps in a given area, and/or e) specific locations suitable for positioning rechargeable traps, and/or f) problem zones.

In one or more embodiments, the processor is programmed to:
2a) perform a multivariate analysis of the database entries of said first group and said second group to produce a second set of data, derived from combined analysis of values of at least one of the said parameters from said first group, and at least one of the said parameters from said second group; the second set of data being representative of a) the current and/or future degree of rats and/or mice infestation in the area where the plurality of rechargeable traps are positioned, and/or b) the optimal timing for providing service to the plurality of rechargeable traps, and/or c) the type of bait to be used in the plurality of rechargeable traps, and/or d) the need for more or less rechargeable traps in a given area, and/or e) specific locations suitable for positioning rechargeable traps, and/or f) problem zones; and
2b) store the second set of data in said database.

In one or more embodiments, the processor is further programmed to 2c) compare said second set of data with a pattern of previously measured values of the same parameters, to predict: a) the current and future degree of rats and mice infestation in the area where the plurality of rechargeable traps are positioned, and/or b) the optimal timing for providing service to the plurality of rechargeable traps, and/or c) the type of bait to be used in the plurality of rechargeable traps, and/or d) the need for more or less rechargeable traps in a given area, and/or e) specific locations suitable for positioning rechargeable traps, and/or f) problem zones.

In one or more embodiments, the processor is programmed to:
3a) combine the first and second sets of data to obtain a third set of data representative of a) the current and future degree of rats and/or mice infestation in the area where the plurality of rechargeable traps are positioned, and/or b) the optimal timing for providing service to the plurality of rechargeable traps, and/or c) the type of bait to be used in the plurality of rechargeable traps, and/or d) the need for more or less rechargeable traps in a given area, and/or e) specific locations suitable for positioning rechargeable traps, and/or f) problem zones;
3b) store the third set of data in said database.

In one or more embodiments, value parameters are selected from both the first group and the second group.

In one or more embodiments, the processor is programmed to perform the univariate analysis employing at least one State Space Model (SSM).

In one or more embodiments, the multivariate analysis is Principal Component Analysis (PCA).

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Detailed Description of the Invention

One tool for multivariate data analysis is Principal Component Analysis (PCA), in literature also referred to as "factor analysis". In short, manifest variables are substituted by latent variables in multivariate data analysis. Manifest variables are direct and measurable, i.e. manifested variables, in the present context also referred to as parameter values, such as the individual number of rats killed by the killing means. Latent variables are weighted sums of the manifest variables. As an example, latent variables t1 and t2 are determined as t1=0.45*individual number of rats killed by the killing means+0.12*humidity, and t2=0.05*individual number of rats killed by the killing means+0.72*humidity. Here, t1 and t2 are projections of the manifest variables, individual number of rats killed by the killing means; and humidity, on vectors [0.45; 0.12] and [0.05; 0.72]. By appropriate selection of weightings, e.g. as eigenvectors of a matrix of manifest variables, the thus determined latent variables include information from all of the manifest variables independently from the number of manifest variables. Accordingly, information in an aggregation of data may be distinguished or separated from random noise. Moreover, the weightings may be visualised, so as to enable extraction of information related to the manifest variables, and the latent variables may be visualised, so as to enable extraction of information concerning objects, for example the optimal timing for providing service to the plurality of rechargeable traps.

The aggregation of data may conveniently be arranged or stored in a table in the database. For example, measured variables may be arranged in columns of the table, and the objects, may be arranged in rows. This table is referred to as X. In PCA, the above-mentioned weightings can be the elements in the eigenvectors to the correlation matrix of X. The number of relevant eigenvectors, which governs the number of relevant latent variables, is dependent from the content of information in X.

The current and/or future degree of rat infestation in the area where the plurality of rechargeable traps are positioned may be determined from a comparison of a pattern in measured parameters, and a reference pattern (or a reference parameter value) (which is typical for a situation with relatively low degree of rat infestation), and a pattern, which is typical for a relatively high degree of rat infestation.

In multivariate data analysis, so-called patterns of parameters (i.e. manifest variables) may be provided in order to take into account mutual influences between parameters. If a selective parameter is at hand, univariate data analysis may be appropriate.

## Claims

1. A system for detecting and predicting rats and mice infestations comprising:
- a plurality of rechargeable traps comprising:
a) a spring driven and/or gas pressure driven killing means;
b) species monitoring means configured for determining the species by monitoring the degree of advancement of the killing means during an individual triggering;
c) kill monitoring means configured for determining the number of kills by monitoring the number of triggering of the killing means; and
d) a transmitter unit configured for receiving monitoring data from the species monitoring means and from the kill monitoring means, and configured for transmitting the received monitoring data; and
- a receiver unit configured for receiving a monitoring data signal from the transmitter unit; the receiver unit comprising a processor and being operatively connected to a database;
wherein the database is adapted to store multiple database entries representing a value of a parameter at various points in time, the parameter being selected from the first group of i) individual number of rats killed by said killing means ii) combined number of rats killed by said killing means, iii) average number of rats killed by said killing means, iv) individual number of mice killed by said killing means v) combined number of mice killed by said killing means, vi) average number of mice killed by said killing means, viii) combined number of rodents killed by said killing means, ix) average number of rodents killed by said killing means, and optionally from the second group of I) location of said plurality of rechargeable traps, II) individual location of said plurality of rechargeable traps III) average temperature in the vicinity of said individual rechargeable traps, IV) individual temperature in the vicinity of said individual rechargeable traps, V) average humidity in the vicinity of said plurality of rechargeable traps, VI) individual humidity in the vicinity of said plurality of rechargeable traps, VII) individual type of bait used in said plurality rechargeable traps, and VIII) bait type composition used in said plurality rechargeable traps; and wherein the processor is programmed to:
1a) perform a univariate analysis of the database entries of said first group to obtain a first set of data representing expected values of at least one of said parameters at future points in time; and
1 b) store the first set of data in said database; and/or
2a) perform a multivariate analysis of the database entries of said first group and said second group to produce a second set of data, derived from combined analysis of values of at least one of the said parameters from said first group, and at least one of the said parameters from said second group; the second set of data being representative of a) the current and/or future degree of rats and/or mice infestation in the area where the plurality of rechargeable traps are positioned, and/or b) the optimal timing for providing service to the plurality of rechargeable traps, and/or c) the type of bait to be used in the plurality of rechargeable traps, and/or d) the need for more or less rechargeable traps in a given area, and/or e) specific locations suitable for positioning rechargeable traps, and/or f) problem zones; and
2b) store the second set of data in said database.

2. A system according to claim 1, wherein the processor is programmed to:
1a) perform a univariate analysis of the database entries of said first group to obtain a first set of data representing expected values of at least one of said parameters at future points in time; and
1 b) store the first set of data in said database.

3. A system according to claim 2, wherein the processor is further programmed to 1c) compare said first set of data with a pattern of previously measured values of the same parameter, to predict: a) the current and future degree of rats and mice infestation in the area where the plurality of rechargeable traps are positioned, and/or b) the optimal timing for providing service to the plurality of rechargeable traps, and/or c) the type of bait to be used in the plurality of rechargeable traps, and/or d) the need for more or less rechargeable traps in a given area, and/or e) specific locations suitable for positioning rechargeable traps, and/or f) problem zones.

4. A system according to any one of the claims 1-3, wherein the processor is programmed to:
2a) perform a multivariate analysis of the database entries of said first group and said second group to produce a second set of data, derived from combined analysis of values of at least one of the said parameters from said first group, and at least one of the said parameters from said second group; the second set of data being representative of a) the current and/or future degree of rats and/or mice infestation in the area where the plurality of rechargeable traps are positioned, and/or b) the optimal timing for providing service to the plurality of rechargeable traps, and/or c) the type of bait to be used in the plurality of rechargeable traps, and/or d) the need for more or less rechargeable traps in a given area, and/or e) specific locations suitable for positioning rechargeable traps, and/or f) problem zones; and
2b) store the second set of data in said database.

5. A system according to claim 4, wherein the processor is further programmed to 2c) compare said second set of data with a pattern of previously measured values of the same parameters, to predict: a) the current and future degree of rats and mice infestation in the area where the plurality of rechargeable traps are positioned, and/or b) the optimal timing for providing service to the plurality of rechargeable traps, and/or c) the type of bait to be used in the plurality of rechargeable traps, and/or d) the need for more or less rechargeable traps in a given area, and/or e) specific locations suitable for positioning rechargeable traps, and/or f) problem zones.

6. A system according to claim 5, wherein the processor is programmed to:
3a) combine the first and second sets of data to obtain a third set of data representative of a) the current and future degree of rats and/or mice infestation in the area where the plurality of rechargeable traps are positioned, and/or b) the optimal timing for providing service to the plurality of rechargeable traps, and/or c) the type of bait to be used in the plurality of rechargeable traps, and/or d) the need for more or less rechargeable traps in a given area, and/or e) specific locations suitable for positioning rechargeable traps, and/or f) problem zones;
3b) store the third set of data in said database.

7. A system according to any one of the claims 1-6, wherein the processor is programmed to perform the univariate analysis employing at least one State Space Model (SSM).

8. A system according to any one of the claims 1-7, wherein the multivariate analysis is Principal Component Analysis (PCA).

9. A system according to any one of the claims 1-8, wherein the value parameters are selected from both the first group and the second group.
